# FASCICULE DE BREVET EUROPEEN

(11) **EP 2 591 151 B1**
(45) Date de publication et mention de la délivrance du brevet: **09.04.2014**
(21) Numéro de dépôt: 11729332.4
(22) Date de dépôt: 06.07.2011
(51) Int. Cl.: C25D 5/54, C25D 13/04, C25D 13/12, C25D 13/18, C09D 5/44, H01G 11/22, H01G 11/24, H01G 11/30, H01G 11/36, H01G 11/48, H01M 4/62, H01M 4/66, C08L 81/02, C09D 7/12, B82Y 30/00, B82Y 10/00, C09D 5/24

(54) **PROCÉDÉ DE PRÉPARATION D'UN MATÉRIAU COMPOSITE, MATÉRIAU AINSI OBTENU ET SES UTILISATIONS**
VERFAHREN ZUR HERSTELLUNG EINES VERBUNDWERKSTOFFES, DAS SOMIT HERGESTELLTE WERKSTOFF UND SEINE ANWENDUNGEN
PROCESS OF MANUFACTURING A COMPOSITE MATERIAL, MATERIAL OBTAINED BY SAID PROCESS AND USES

(30) Priorité: 07.07.2010 FR 1055526
(43) Date de publication de la demande: 15.05.2013
(73) Titulaire: Commissariat à l'Énergie Atomique et aux Énergies Alternatives, 75015 Paris (FR); Université François Rabelais, 37041 Tours (FR); Universite De Cergy Pontoise, 95011 Cergy Pontoise (FR)
(72) Inventeur: SARRAZIN, Christian, F-91270 Verrières Le Buisson (FR); LAGOUTTE, Sébastien, F-95240 Cormeilles En Parisis (FR); PINAULT, Mathieu, F-92160 Antony (FR); TRAN VAN, François, F-37230 Fondettes (FR); CHEVROT, Claude, F-78100 Saint Germain En Laye (FR); AUBERT, Pierre Henry, F-95520 Osny (FR)
(74) Mandataire: Ilgart, Jean-Christophe
(86) Numéro de dépôt international: PCT/EP2011/061438
(87) Numéro de publication internationale: WO 2012/004317

(56) Documents cités:
- US-A1- 2005 153 130
- US-A1- 2010 051 471
- US-B1- 6 356 433
- FANG Y ET AL: "Self-supported supercapacitor membranes: Polypyrrole-coated carbon nanotube networks enabled by pulsed electrodeposition", JOURNAL OF POWER SOURCES, ELSEVIER SA, CH, vol. 195, no. 2, 15 janvier 2010 (2010-01-15), pages 674-679, XP026640155, ISSN: 0378-7753, DOI: DOI:10.1016/J.JPOWSOUR.2009.07.033 [extrait le 2009-07-23]

## Description

### DOMAINE TECHNIQUE

La présente invention concerne le domaine des nanotechnologies et, plus particulièrement, le domaine des matériaux du type nanocomposite, contenant des nano-objets de forme allongée tels que des nanotubes.

Ainsi, la présente invention concerne un procédé de préparation d'un matériau composite comprenant un ensemble de nanotubes notamment alignés dans une matrice polymère conductrice de l'électricité.

La présente invention porte également sur le matériau composite ainsi préparé et ses différentes utilisations.

### ÉTAT DE LA TECHNIQUE ANTÉRIEURE

Les nano-objets suscitent actuellement un engouement particulier du fait de leurs propriétés originales et exacerbées par rapport aux matériaux classiques. En effet, les nano-objets et notamment les nanotubes, tels que les nanotubes de carbone (NTC) présentent de nombreux intérêts aussi bien au niveau de leurs structures et de leurs propriétés physiques qu'au niveau de leurs applications potentielles notamment dans les membranes, les dispositifs de séparation physique, les électrodes, les matériaux composites, les dispositifs thermiques, optiques ou électroniques, ainsi que les supports de catalyseurs et les dispositifs de stockage ou de conversion d'énergie chimique, lumineuse, électrique, mécanique, etc ....

Les nano-objets tels que les NTC sont utilisés dans des matériaux composites tels que des matériaux nano-objets/polymère ou nano-objets/résine et notamment des matériaux NTC/polymère ou NTC/résine. Un tel matériau permet non seulement de tirer profit des propriétés notamment électriques des nano-objets, voire même de les améliorer mais aussi d'obtenir un matériau plus facilement manipulable.

Dans le domaine des matériaux composites, les NTC ne sont pas nécessairement alignés, ni ordonnés d'une quelconque façon. Au contraire, ils sont souvent « dispersés ». Les composites sont majoritairement imprégnés grâce à des techniques assistées en pression et/ou par température. Aujourd'hui, les composites les plus prometteurs en terme de développement sont ceux à matrice polymère, intéressants pour des applications à haute valeur ajoutée notamment dans des domaines comme l'aérospatial ou l'énergie, ainsi que pour l'industrie des plastiques conducteurs.

La littérature fait état d'un nombre important de travaux relatifs aux procédés de préparation des matériaux composites à base de nano-objets. A titre d'exemples, 352 publications dont l'objet porte sur les matériaux composites contenant pour la majorité des NTC mais aussi des nanotubes en oxyde de manganèse dans le seul domaine des supercondensateurs ont été recensées en 2008.

Tout d'abord, les NTC ont été utilisés comme matériaux conducteurs de l'électricité dans des matrices polymères isolantes. La demande internationale WO 2008/005431 au nom de Renselaer Polytechnic Institute publiée le 10 janvier 2008 décrit un nanocomposite formé à partir de NTC alignés présentant une longueur comprise entre 100 µm et 800 µm et d'un polymère non conducteur de l'électricité. Ce polymère est dissous dans le solvant d'utilisation pour l'électrochimie se présentant sous forme d'un liquide ionique. Le polymère non conducteur dissous et le liquide ionique imprègnent les nanotubes. L'ensemble est plongé dans la glace pour cristalliser le polymère puis lavé dans l'éthanol afin de retirer le liquide ionique sans le polymère non conducteur insoluble. Ils obtiennent ainsi un nanocomposite flexible, avec il semblerait (grâce à la porosité obtenue) des capacitances pour l'électrode proches de 37 F/g, i.e. proches des NTC seuls.

En variante, la demande de brevet US 2008/039557 aux noms de Tsinghua University et Hon Hai Precision Industry publiée le 14 février 2008 propose un matériau composite présentant de bonnes propriétés thermiques et électriques. D'un point de vue structurel, ce matériau composite comprend des NTC dont la longueur est de 100 à 200 µm, alignés et incorporés/imprégnés dans une résine telle qu'une résine époxy, une résine acrylique, du silicone ou une graisse conductrice de la chaleur. Ce matériau composite est préparé en imprégnant les NTC par la résine liquide puis en la solidifiant.

L'utilisation de NTC dans des matrices polymères conductrices de l'électricité présente également un attrait depuis plusieurs années. Parmi les polymères conducteurs, la polyaniline reste très étudiée pour ses résultats impressionnants et malgré ses défauts tels qu'une stabilité pauvre ou une fenêtre de potentiel réduite.

La demande de brevet US 2003/077515 au nom de Chen et al. publiée le 24 avril 2003 décrit un matériau composite conducteur de l'électricité à base de NTC et de polymères conducteurs tels que du polypyrrole. Ce matériau composite est préparé par électropolymérisation de différents monomères sur des NTC dont la taille ne dépasse pas 100 µm, lesdits NTC étant en suspension dans une solution. L'électropolymérisation peut être mise en oeuvre soit à potentiel constant ou cyclique, soit à courant constant. Le fait qu'elle soit réalisée sur des NTC dispersés en solution conduit à des matériaux composites dans lesquels les NTC ne sont pas alignés. De plus, les matériaux composites ainsi préparés ne semblent pas être auto-supportés puisqu'il est envisagé qu'un élément conducteur tel qu'une électrode les supporte (voir, paragraphe [0065]).

La demande internationale WO 03/049219 au nom de The Trustees of Boston College publiée le 12 juin 2003 propose un matériau d'électrodes comprenant des NTC revêtus par un polymère conducteur qui est, de façon préférée, du polypyrrole. Les NTC mis en oeuvre dans ce document présentent une taille inférieure ou égale à 10 µm. Deux techniques sont envisagées pour préparer un tel matériau : la première consiste à dissoudre le polymère conducteur dans un solvant adapté qui est, par la suite, éliminé et la seconde à une polymérisation *in situ.* Cette polymérisation est réalisée en mode potentiostatique et directement sur le substrat sur lequel les NTC ont été synthétisés.

En variante, la demande internationale WO 2008/016990 au nom de ADA Technologies, Inc. publiée le 7 février 2008 propose des supercondensateurs à base de nanocomposites et à forte performance. Le supercondensateur proposé est préparé avec deux électrodes de NTC alignés d'une taille supérieure à 75 µm et un électrolyte de type gel polymère électrolyte mis en oeuvre avec les liquides ioniques ou ILGPE (pour « Ionic Liquide incorporated Gel Polymer Electrolyte »).

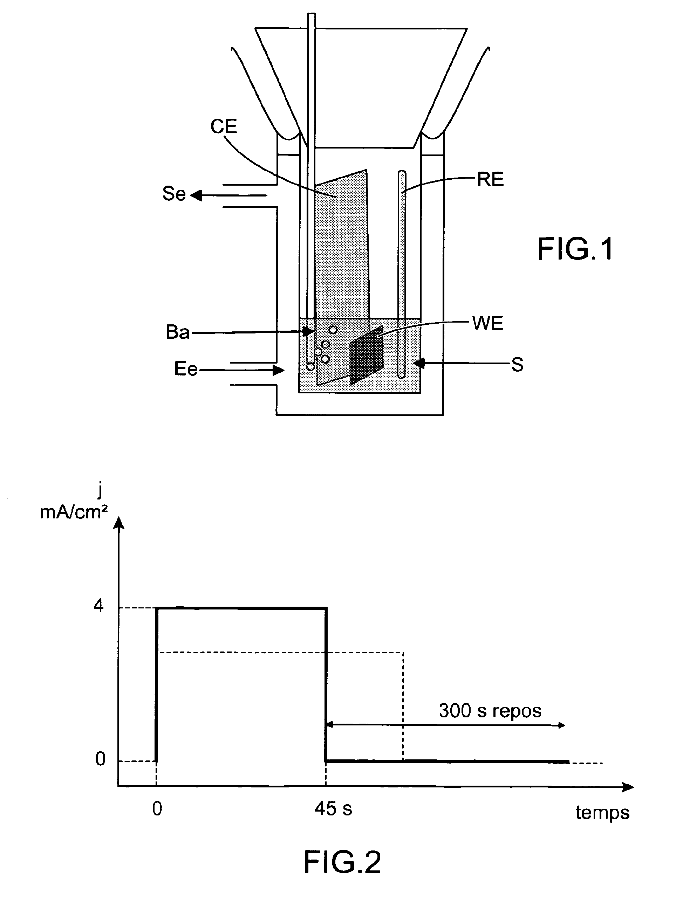

Enfin, l'article de Fang et al., 2010 (« Self-supported supercapacitor membranes: Polypyrrole-coated carbon nanotube networks enabled by pulsed electrodeposition » Journal of Power Sources, vol. 195, pages 674-679) propose une membrane de supercondensateur auto-supportée consistant en un réseau de NTC revêtus de polypyrrole. Les NTC dont la longueur est de l'ordre de 50 µm sont utilisés dans ce composite non pas alignés mais filtrés sur une membrane pour en faire un réseau enchevêtré. C'est la présence de cette membrane qui rend le nanocomposite auto-supporté. En d'autres termes, les NTC sont auto-supportés avant le dépôt du polymère conducteur et cette propriété n'est pas la conséquence du procédé mis en oeuvre pour déposer le polymère conducteur. Ce dépôt se fait de façon électrochimique dans une solution électrolytique aqueuse à 0,1 M de KCl, en mode potentiostatique pulsée i.e. utilisation d'impulsions à potentiel constant (voir Figure 1A, bas).

Les inventeurs se sont fixés pour but de proposer un procédé permettant de préparer un matériau composite comprenant des NTC alignés, enrobés, imprégnés ou revêtus d'un polymère conducteur obtenu à partir d'une large gamme de monomères i.e. à partir de monomères présentant des propriétés chimiques notamment en terme de solubilité très diverses, ledit matériau composite présentant des propriétés électriques égales ou supérieures aux matériaux de l'état de la technique et étant auto-supporté sans nécessiter d'étapes additionnelles, préalablement ou suite au procédé, pour conférer une telle propriété.

### EXPOSÉ DE L'INVENTION

La présente invention permet de résoudre les problèmes techniques tels que précédemment définis et d'atteindre le but que se sont fixés les inventeurs.

En effet, les travaux des inventeurs ont permis de préparer un matériau composite comprenant des NTC alignés sous forme de tapis et sur lesquels est déposée une matrice polymère conductrice de l'électricité permettant ainsi d'obtenir un matériau composite auto-supporté sans autre traitement que le dépôt électrochimique de la matrice.

La solution technique proposée par les inventeurs correspond à un choix particulier quant à la méthode de dépôt de la matrice polymère conductrice sur les NTC à savoir un dépôt électrochimique en mode galvanostatique pulsé.

En effet, les inventeurs ont montré que le dépôt électrochimique d'un polymère conducteur sur des NTC se présentant sous forme d'un tapis, par technique galvanostatique pulsée permet une électropolymérisation de cette matrice dans toute la profondeur du tapis. De plus, la morphologie du tapis n'est nullement modifiée par cette électropolymérisation en mode galvanostatique pulsé.

Cette technique d'électropolymérisation en mode galvanostatique pulsé peut être mise en oeuvre dans des solutions électrolytiques très variées allant des solutions classiques électrolytiques du type contenant un solvant protique ou aprotique et un sel à des solutions beaucoup plus visqueuses telles que des solutions contenant un solvant du type liquide ionique. Cette variété dans les solutions électrolytiques utilisables entraîne un large choix quant aux monomères, précurseurs de la matrice polymère conductrice. En effet, quel(s) que soi(en)t le (ou les) monomère(s) utilisé(s), une solution électrolytique adaptée pourra toujours être trouvée.

Un tel dépôt peut être mis en oeuvre sur des tapis de NTC très longs allant jusqu'à plusieurs millimètres. Comme précédemment décrit, les matériaux composites de l'état de la technique comprenant un tapis de NTC dans une matrice polymère conductrice de l'électricité sont de taille relativement faible i.e. inférieure à 200 µm.

De plus, un tel dépôt peut être mis en oeuvre sur une large gamme de densité en NTC, sur une large gamme de diamètre moyen de NTC et pour des NTC plus ou moins bien structurés i.e. contenant plus ou moins de défauts structuraux.

Enfin, le matériau composite selon l'invention est non seulement auto-supporté mais présente également une certaine flexibilité conférée par la matrice polymère conductrice de l'électricité.

Fait intéressant, le procédé de la présente invention s'applique non seulement aux NTC se présentant sous forme de tapis mais aussi, de façon plus générale, à tous les nano-objets de forme allongée conducteurs ou semi-conducteurs de l'électricité qu'ils soient dispersés ou alignés.

Ainsi, la présente invention propose un procédé de préparation d'un matériau composite comprenant des nano-objets de forme allongée conducteurs ou semi-conducteurs de l'électricité et une matrice polymère conductrice de l'électricité, ledit procédé comprenant une étape consistant à déposer électrochimiquement ladite matrice sur lesdits nano-objets par une technique galvanostatique pulsée.

Par « nano-objet », on entend, dans le cadre de la présente invention, un objet, organique ou inorganique, de taille nanométrique i.e. dont au moins une de ses dimensions externes est de taille nanométrique.

Par « nano-objet de forme allongée », on entend, dans le cadre de la présente invention, un nano-objet tel que précédemment défini, dont au moins deux de ses dimensions externes sont de taille nanométrique, la 3^{ième} de ses dimensions étant au moins 2 fois, notamment au moins 5 fois, en particulier au moins 10 fois et, plus particulièrement, au moins 50 fois supérieure aux deux autres dimensions.

Par « nano-objet de forme allongée conducteur de l'électricité », on entend, dans le cadre de la présente invention, un nano-objet de forme allongée tel que précédemment défini permettant le passage du courant électrique en laissant les charges électriques se déplacer librement.

Par « nano-objet de forme allongée semi-conducteur de l'électricité », on entend, dans le cadre de la présente invention, un nano-objet de forme allongée tel que précédemment défini présentant une conductivité électrique intermédiaire entre les métaux et les isolants. Les propriétés de conductivité d'un semi-conducteur sont influencées principalement par les porteurs de charge (électrons ou lacunes électroniques) que présente le semi-conducteur. Ces propriétés sont déterminées par deux bandes d'énergie particulières appelées la bande de valence (correspondant aux électrons impliqués dans les liaisons covalentes) et la bande de conduction (correspondant aux électrons dans un état excité et capables de se déplacer dans le semi-conducteur). Le « gap » représente la différence d'énergie entre la bande de valence et la bande de conduction.

Les nano-objets de forme allongée conducteurs ou semi-conducteurs de l'électricité avantageusement mis en oeuvre dans le cadre de la présente invention sont choisis parmi les nanofibres, les nanotubes et les nanofils.

Par « nanofibre », on entend, dans le cadre de la présente invention, une structure unidimensionnelle ou sensiblement unidimensionnelle présentant une épaisseur ou un diamètre variant de 0,5 nm à 1000 nm, notamment, de 1 nm à 500 nm et, en particulier, entre 2 nm et 50 nm.

Par « nanotube », on entend, dans le cadre de la présente invention, une structure tubulaire et/ou cylindrique dont le diamètre interne varie entre 0,5 nm et 100 nm, notamment entre 0,5 nm et 50 nm et, plus spécifiquement, entre 0,5 nm et 10 nm.

Par « nanofil », on entend, dans le cadre de la présente invention, une nanofibre telle que précédemment définie, solide.

Les nano-objets de forme allongée conducteurs ou semi-conducteurs de l'électricité et notamment les nanofibres, les nanotubes et les nanofils mis en oeuvre dans le cadre de la présente invention sont un matériau choisi dans le groupe constitué par le carbone, le silicium, l'or, l'argent, le tantale, le nickel, le platine, le cuivre, le molybdène, le palladium, l'acier, l'acier inoxydable, le zinc, le nitrure de bore, l'oxyde de zinc, l'oxyde de manganèse, le nitrure de gallium, le nitrure de silicium, le bisulfure de tungstène, le bisulfure de molybdène, le phosphure d'indium, le séléniure de tungstène, le séléniure de molybdène, le dioxyde de titane, le dioxyde de silicium, le trioxyde de molybdène et leurs mélanges.

Parmi les nano-objets de forme allongée conducteurs ou semi-conducteurs de l'électricité avantageusement utilisés dans le cadre de la présente invention, se trouvent les nanotubes de carbone. Pour rappel, un nanotube de carbone est défini comme un enroulement concentrique d'une ou de plusieurs couches de graphène (pavage d'hexagones de carbone). On parle :
- de nanotubes mono-feuillet, de nanotubes simple-paroi ou de SWNT (pour « Single Wall NanoTube ») lorsqu'il s'agit d'une seule couche de graphène ;
- de nanotubes double-feuillets, de nanotubes double-parois ou de DWNT (pour « Double Wall NanoTube ») dans le cas de deux couches de graphène ;
- de nanotubes multi-feuillets, de nanotubes multi-parois ou de MWNT (pour « Multi Wall NanoTube ») dans le cas de plusieurs couches de graphène.

La présente invention s'applique à tout type de nanotubes de carbone et ce quel que soit leur procédé de préparation. Ainsi, les nanotubes de carbone mis en oeuvre dans le cadre de la présente invention peuvent être des nanotubes à une seule couche de graphène (SWNT), des nanotubes à deux couches de graphène (DWNT), des nanotubes à plusieurs couches de graphène (MWNT) ou un de leurs mélanges.

L'homme du métier connaît différents procédés permettant de préparer des nano-objets tels que précédemment définis.

A titre d'exemples plus particuliers de procédés permettant de préparer des nanofils, on peut citer les procédés consistant à graver un substrat des techniques de lithographie et de gravure, à faire croître le nanofil par des méthodes de dépôt chimique en phase vapeur (ou CVD pour « Chemical Vapor Deposition ») à partir de films minces métalliques tels que l'or.

A titre d'exemples plus particuliers de procédés permettant de préparer des nanotubes de carbone, on peut citer les procédés physiques basés sur la sublimation du carbone tels que des méthodes d'arc électrique, d'ablation laser ou utilisant un four solaire et les procédés chimiques tels que le procédé CVD ou consistant à pyrolyser des sources carbonées sur des catalyseurs métalliques. Un procédé particulièrement adapté à la préparation de NTC est la méthode de CVD-injection notamment décrite dans l'article de Pinault et al., 2005, « Growth of multiwalled carbon nanotubes during the initial stages of aerosol-assisted CCVD », Carbon 43, 2968 et l'article de Pinault et al., 2005, « Evidence of sequential lift in growth of aligned multi-walled carbon nanotube multilayers », Nano Lett. 5 (12), 2394.

Les nano-objets de forme allongée conducteurs ou semi-conducteurs de l'électricité mis en oeuvre dans le cadre de la présente invention peuvent présenter une quelconque chiralité et une quelconque longueur. Avantageusement, ces nano-objets présentent une longueur comprise entre 10 nm et 2 cm, notamment entre 20 nm et 1 cm, en particulier, entre 50 nm et 8 mm et, tout particulièrement, entre 100 nm et 5 mm.

Dans le cadre de la présente invention, les nano-objets de forme allongée conducteurs ou semi-conducteurs de l'électricité peuvent être mis en oeuvre dans une conformation, les uns par rapport aux autres, dispersée, dégradée ou alignée. Par « conformation dégradée », on entend des nano-objets sensiblement droits mais pas forcément alignés les uns par rapport aux autres. Alignement et tortuosité des nano-objets sont des paramètres accessibles par mesure aux rayons X.

Au contraire, dans le cas d'une conformation alignée, les nano-objets sont utilisés alignés les uns par rapport aux autres dans une matrice verticale pour « vertical array ». Dans cette conformation, ils sont généralement et substantiellement perpendiculaires à un support. On parle de « tapis » et notamment de tapis de nanofibres, de nanotubes ou de nanofils. On parle aussi de « forêt » ou « réseau ». Une conformation alignée peut être obtenue dès la préparation des nano-objets ou une fois ces derniers préparés typiquement par des techniques de filtration notamment dans le coeur des nanotubes ou des techniques par un flux transverse à l'axe des nanotubes. De façon avantageuse, dans le procédé selon l'invention, les nano-objets de forme allongée conducteurs ou semi-conducteurs de l'électricité se présentent sous forme d'un tapis dans lequel les nano-objets sont alignés.

Par « matrice polymère conductrice de l'électricité », on entend, dans le cadre de la présente invention, une structure se présentant sous forme d'un film, poreux ou non poreux, à la surface des nano-objets mis en oeuvre dans le procédé de l'invention et essentiellement constituée d'un (ou plusieurs) (co)polymère(s) conducteur(s) de l'électricité.

Par « (co)polymère conducteur de l'électricité », on entend, dans le cadre de la présente invention, un (co)polymère dont la chaîne principale polymérique et éventuellement les chaînes latérales présentent au moins une double liaison ou au moins un cycle aromatique. Typiquement, un (co)polymère conducteur de l'électricité est obtenu par polymérisation d'un (ou plusieurs) monomère(s) portant une double liaison et/ou un cycle aromatique et éventuellement un hétéroatome tel qu'un atome d'oxygène, un atome d'azote, un atome de soufre ou un atome de fluor.

La matrice polymère mise en oeuvre dans le cadre de la présente invention est avantageusement constituée d'un (ou plusieurs) (co)polymère(s) choisi(s) parmi les polyfluorènes, les polypyrènes, les polyazulènes, les polynaphtalènes, les polypyrroles, les polycarbazoles, les polyindoles, les polyazépines, les polyanilines, les polythiophènes, les poly(p-phénylène sulfide), les polyacétylènes et les poly(p-phénylène vinylène). De façon avantageuse, la matrice polymère mise en oeuvre dans le cadre de la présente invention est avantageusement constituée d'un (ou plusieurs) (co)polymère(s) choisi(s) parmi les polypyrroles, les polycarbazoles, les polyanilines et les polythiophènes.

L'homme du métier connaît différents monomères utilisables pour obtenir, par polymérisation, les polymères ci-dessus listés.

A titre d'exemples, les polypyrroles peuvent être obtenus par polymérisation d'un (ou plusieurs) monomère(s) choisi(s) parmi le pyrrole et les dérivés du pyrrole. Un dérivé du pyrrole est avantageusement un pyrrole substitué par au moins un substituant choisi parmi un (hétéro)alkyle, linéaire, ramifié ou cyclique en C1 à C10 et notamment en C1 à C5, éventuellement substitué ; un atome d'halogène ; un groupement -OH ; un groupement -COOH ; un alcoxyalkyle en C2 à C20 et notamment en C2 à C10, éventuellement substitué ; un polyéther d'alcoxyle ; un polyéther d'alkylène ; un (hétéro)aryle en C3 à C20 et notamment en C4 à C16, éventuellement substitué ou un (hétéro)aralkyle en C3 à C20 et notamment en C4 à C16, éventuellement substitué. Un dérivé d'un pyrrole peut également être un pyrrole substitué par au moins deux substituants formant un groupement pontant en C1 à C10 et notamment en C1 à C5 comprenant éventuellement un hétéroatome. A titre d'exemples de dérivés de pyrrole utilisables, on peut citer le 3-méthyl pyrrole, le 3-éthyl pyrrole, le 3-butyl pyrrole, le 3-bromo pyrrole, le 3-méthoxy pyrrole, le 3,4-dichloro pyrrole et le 3,4-dipropoxy pyrrole.

Par « éventuellement substitué », on entend dans le cadre de la présente invention un groupement qui peut être substitué par -OH, -COOH, un atome d'halogène ou un alkyle en C1 à C4.

A titre d'exemples, les polycarbazoles peuvent être obtenus par polymérisation d'un (ou plusieurs) monomère(s) choisi(s) parmi le carbazole et les dérivés du carbazole. Un dérivé du carbazole est avantageusement un carbazole substitué par au moins un substituant choisi parmi un (hétéro)alkyle, linéaire, ramifié ou cyclique en C1 à C10 et notamment en C1 à C5, éventuellement substitué ; un atome d'halogène ; un groupement -OH ; un groupement -COOH ; un alcoxyalkyle en C2 à C20 et notamment en C2 à C10, éventuellement substitué ; un polyéther d'alcoxyle ; un polyéther d'alkylène ; un (hétéro)aryle en C3 à C20 et notamment en C4 à C16, éventuellement substitué ou un (hétéro)aralkyle en C3 à C20 et notamment en C4 à C16, éventuellement substitué. Un dérivé d'un carbazole peut également être un carbazole substitué par au moins deux substituants formant un groupement pontant en C1 à C10 et notamment en C1 à C5 comprenant éventuellement un hétéroatome.

A titre d'exemples, les polyanilines peuvent être obtenus par polymérisation d'un (ou plusieurs) monomère(s) choisi(s) parmi l'aniline et les dérivés de l'aniline. Un dérivé de l'aniline est avantageusement une aniline substituée par au moins un substituant choisi parmi un (hétéro)alkyle, linéaire, ramifié ou cyclique en C1 à C10 et notamment en C1 à C5, éventuellement substitué ; un atome d'halogène ; un groupement -OH ; un groupement -COOH ; un alcoxyalkyle en C2 à C20 et notamment en C2 à C10, éventuellement substitué ; un polyéther d'alcoxyle ; un polyéther d'alkylène ; un (hétéro)aryle en C3 à C20 et notamment en C4 à C16, éventuellement substitué ou un (hétéro)aralkyle en C3 à C20 et notamment en C4 à C16, éventuellement substitué. Un dérivé de l'aniline peut également être une aniline substituée par au moins deux substituants formant un groupement pontant en C1 à C10 et notamment en C1 à C5 comprenant éventuellement un hétéroatome.

A titre d'exemples, les polythiophènes peuvent être obtenus par polymérisation d'un (ou plusieurs) monomère(s) choisi(s) parmi le thiophène et les dérivés du thiophène. Un dérivé du thiophène est avantageusement un thiophène substitué par au moins un substituant choisi parmi un (hétéro)alkyle, linéaire, ramifié ou cyclique en C1 à C10 et notamment en C1 à C5, éventuellement substitué ; un atome d'halogène ; un groupement -OH ; un groupement -COOH ; un alcoxyalkyle en C2 à C20 et notamment en C2 à C10, éventuellement substitué ; un polyéther d'alcoxyle ; un polyéther d'alkylène ; un (hétéro)aryle en C3 à C20 et notamment en C4 à C16, éventuellement substitué ou un (hétéro)aralkyle en C3 à C20 et notamment en C4 à C16, éventuellement substitué. Un dérivé d'un thiophène peut également être un thiophène substitué par au moins deux substituants formant un groupement pontant en C1 à C10 et notamment en C1 à C5 comprenant éventuellement un hétéroatome. A titre d'exemples de dérivés de thiophène utilisables, on peut citer le 3-acide acétique thiophène, le 3,4-éthylène dioxythiophène, le 3-méthyl thiophène, le 3-éthyl thiophène, le 3-butyl thiophène, le 3-bromo thiophène, le 3-méthoxy thiophène, le 3,4-dichloro thiophène et le 3,4-dipropoxy thiophène.

Le procédé de préparation d'un matériau composite selon la présente invention se caractérise par l'utilisation d'un mode galvanostatique pulsé (ou technique galvanostatique pulsée) pour déposer électrochimiquement, sur les nano-objets de forme allongée conducteurs ou semi-conducteurs de l'électricité, la matrice polymère conductrice de l'électricité.

Par « mode galvanostatique », on entend, dans le cadre de la présente invention, une technique d'électropolymérisation avec application d'une densité de courant constante.

Par « mode galvanostatique pulsé », on entend, dans le cadre de la présente invention, une technique d'électropolymérisation avec au moins deux applications successives d'une densité de courant constante pendant une période tₒₙ, les applications de courant étant également appelées « pulses » ou « impulsions » et étant séparées par une période de repos t_{off} sans application d'un(e) quelconque courant ou tension.

Les expressions « mode galvanostatique pulsé » et « mode galvanostatique séquencé » sont équivalentes et interchangeables dans la présente.

La densité de courant appliquée durant les périodes tₒₙ est comprise entre 0,5 et 10 mA/cm², notamment entre 1 et 8 mA/cm² et, en particulier, entre 2 et 6 mA/cm².

La durée de chaque période tₒₙ est, dans le cadre du procédé selon la présente invention, relativement longue. Avantageusement, la durée de chaque période tₒₙ est comprise entre 10 et 100 s, notamment entre 20 et 80 s et, en particulier, entre 30 et 60 s. Ainsi, dans la technique galvanostatique pulsée mise en oeuvre dans le procédé selon l'invention, une densité de courant constante est appliquée pendant des périodes (tₒₙ) de durée comprise entre 10 et 100 s, notamment entre 20 et 80 s et, en particulier, entre 30 et 60 s.

Le nombre de périodes tₒₙ i.e. le nombre de pulses est typiquement compris entre 10 et 500, notamment entre 20 et 400 et, en particulier, entre 40 et 300. Cependant, l'homme du métier sera capable de déterminer pour la mise en oeuvre d'un procédé particulier, le nombre de pulses nécessaire et suffisant sur la base de l'enseignement du paragraphe 4.2. ci-après.

La durée de chaque période t_{off} doit être, dans le cadre du procédé selon la présente invention, beaucoup plus longue que les périodes d'application du courant, notamment lorsque les nano-objets de forme allongée sont utilisés à une densité élevée comme sous forme d'un tapis. En effet, lors de l'application des pulses, la matrice polymère se dépose sur les nano-objets, une période de repos (t_{off}) longue permet au(x) monomère (s) présent(s) en solution de diffuser au sein des nano-objets afin de régénérer le(s) monomère(s) à cet endroit. Ainsi, une telle période de repos (t_{off}) est nécessaire pour la diffusion et le renouvellement en monomères à l'intérieur du tapis.

Avantageusement, la durée de chaque période t_{off} est supérieure à la durée de chaque période tₒₙ d'un facteur 2, notamment d'un facteur 3, en particulier, d'un facteur 4 et, plus particulièrement, d'un facteur 5. En d'autres termes, dans la technique galvanostatique pulsée mise en oeuvre dans le cadre du procédé selon l'invention, la durée de chaque période de repos (t_{off}) est supérieure à la durée de chaque période d'application d'une densité de courant constante (tₒₙ) d'un facteur 2, notamment d'un facteur 3, en particulier, d'un facteur 4 et, plus particulièrement, d'un facteur 5. Avantageusement, la durée de chaque période t_{off} est comprise entre 20 et 600 s, notamment entre 50 et 500 s et, en particulier, entre 100 et 400 s.

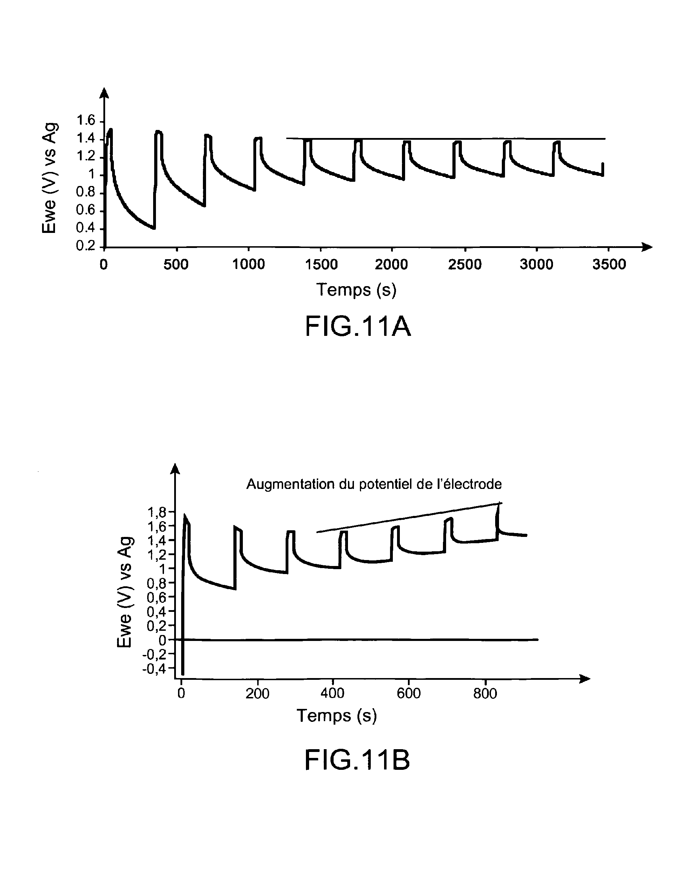

Toutefois, la période de repos (t_{off}) dépendra de facteurs tels que viscosité du solvant, densité de courant, temps du pulse. Il est cependant facile de déterminer, pour chacune des expérimentations, si la période de repos (t_{off}) est suffisante ou non. Il suffit pour cela d'observer l'allure de la courbe du potentiel lors de l'électropolymérisation. Avec un temps de repos suffisant, le potentiel atteint, diminue au début puis reste quasi-constant tout au long de la synthèse (cf. ci-après Figures 11A et 11B).

Plus particulièrement, le procédé selon la présente invention comprend les étapes consistant à :
a) mettre en contact les nano-objets de forme allongée conducteurs ou semi-conducteurs de l'électricité notamment tels que précédemment définis avec une solution (ci-après désignée solution (S)) contenant le (ou les) monomère(s), précurseur(s) de ladite matrice polymère conductrice ;
b) polariser lesdits nano-objets en mode galvanostatique pulsé moyennant quoi ladite matrice polymère conductrice est électrochimiquement déposée sur lesdits nano-objets.

Préalablement à l'étape (a) du procédé selon la présente invention, les nano-objets de forme allongée conducteurs ou semi-conducteurs de l'électricité peuvent être soumis à un traitement (ou pré-traitement) oxydant i.e. visant à oxyder la surface des nano-objets mis en oeuvre et/ou à préparer la surface à une future oxydation par formation de radicaux. Une oxydation modifie la surface des nano-objets notamment en fixant et/ou en introduisant, sur les extrémités ou défauts des nano-objets, des groupements riches en oxygène tels que des groupements de type carboxylique (-COOH), hydroxyle (-OH), alcoxyle (-OX avec X représentant un groupe alkyle, un groupe acyle ou un groupe aroyle), carbonyle (-C=O), percarbonique (-C-O-OH) et parfois amide (-CONH).

Un tel traitement oxydant repose sur deux grands types de modifications de surface fondés sur :
- des traitements physiques tels qu'un traitement par plasma notamment d'oxygène, un traitement aux UV, un traitement aux rayons X ou y, un traitement par irradiation aux électrons et aux ions lourds ou
- des traitements chimiques tels qu'un traitement à la potasse alcoolique, un traitement par un acide fort (HC1, H₂SO₄, HNO₃, HClO₄) , un traitement à la soude, un traitement par un oxydant fort (KMnO₄, K₂Cr₂0₇, KClO₃ ou CrO₃ dans l'acide chlorhydrique, l'acide sulfurique ou dans l'acide nitrique), un traitement à l'ozone et un traitement thermique sous atmosphère oxygénée (O₂, H₂O,...).

De tels nano-objets, une fois ce pré-traitement oxydant mis en oeuvre, peuvent se présenter comme des nano-objets oxydés i.e. chargés négativement.

Lors de l'étape (a) et comme précédemment expliqué, la solution (S) peut se présenter sous forme d'un solvant, protique ou aprotique, pur, lorsque les nano-objets de forme allongée conducteurs ou semi-conducteurs de l'électricité sont chargés négativement ; sous forme d'une solution électrolytique contenant, comme solvant, un solvant protique ou un solvant aprotique ; ou sous forme d'un liquide ionique.

Par « solvant protique », on entend, dans le cadre de la présente invention, un solvant qui comporte au moins un atome d'hydrogène susceptible d'être libéré sous forme de proton et avantageusement choisi dans le groupe constitué par l'eau, l'eau désionisée, l'eau distillée, acidifiées ou basiques, l'acide acétique, les solvants hydroxylés comme le méthanol et l'éthanol, les glycols liquides de faible poids moléculaire tels que l'éthylèneglycol, et leurs mélanges.

Par « solvant aprotique », on entend, dans le cadre de la présente invention, un solvant qui n'est pas susceptible de libérer un proton ou d'en accepter un dans des conditions non extrêmes et avantageusement choisi parmi les alcanes halogénés tels que le dichlorométhane ; la diméthylformamide (DMF) ; les cétones tels que l'acétone ou la 2-butanone ; l'acétonitrile ; le tétrahydrofuranne (THF) ; la N-méthylpyrrolidone (NMP) ; le diméthyl sulfoxyde (DMSO) et leurs mélanges.

De plus, le solvant utilisable dans le cadre de la présente invention peut être un mélange d'au moins un solvant protique avec au moins un solvant aprotique.

La solution électrolytique utilisable dans le cadre de la présente invention comprend, en plus d'un solvant tel que précédemment défini, un électrolyte sous forme d'un sel dissous dans le solvant. L'anion de ce sel peut être choisi parmi les anions inorganiques tels que Br⁻, Cl⁻, HCO₃⁻, H₂PO₄⁻, Cr₂O₄³⁻, BF₄⁻ ou PF₆⁻ ; les anions organiques ; les anions polymériques et les anions biologiques. Le cation de ce sel est un cation métallique tels que Li⁺, Na⁺, Mg²⁺, Cu²⁺, Zn²⁺ et Al³⁺.

D'autres exemples de solvants et d'électrolytes utilisables dans le cadre de la présente invention sont donnés aux paragraphes [0040] à [0048] de la demande internationale WO 2003/077515.

Tout liquide ionique contenant un cation associé à un anion est utilisable dans le cadre de la présente invention. Parmi ces liquides ioniques, on peut citer des liquides ioniques contenant des ions ammonium quaternaire tels que les ions 1-éthyl-3-méthyl imidazolium, 1-méthyl-3-propyl imidazolium, 1-méthyl-3-isopropyl imidazolium, 1-butyl-3-méthyl imidazolium, 1-éthyl-2,3-diméthyl imidazolium, 1-éthyl-3,4-diméthyl imidazolium, N-propyl pyridinium, N-butyl pyridinium, N-tert-butyl pyridinium, N-tert-butanol-pentyl pyridinium, N-méthyl-N-propylpyrrolidinium, N-butyl-N-méthylpyrrolidinium, N-méthyl-N-pentyl pyrrolidinium, N-propoxyéthyl-N-méthyl pyrrolidinium, N-méthyl-N-propyl piperidinium, N-méthyl-N-isopropyl piperidinium, N-butyl-N-méthyl piperidinium, N-N-isobutylméthyl piperidinium, N-sec-butyl-N-méthyl piperidinium, N-méthoxy-N-éthylméthyl piperidinium, et N-éthoxyéthyl-N-méthyl piperidinium. On peut également citer les liquides ioniques contenant des ions ammonium tels que les ions butyl-N-N,N,N-triméthyl ammonium, N-éthyl-N,N-diméthyl-N-propyl ammonium, N-butyl-N-éthyl-N,N-diméthyl ammonium, associés à tout anion tels que les anions tétrafluoroborate (BF₄⁻), hexafluorophosphate (PF₆⁻), bis(trifluorométhanesulfonyl)amide (TFSI) ou bis(trifluorosulfonyl)amides (FSI).

D'autres liquides ioniques utilisables dans le cadre de la présente invention sont décrits dans la demande internationale WO 2008/016990 (page 18, lignes 5 à 23).

Le (ou les) monomère(s) précurseur(s) de la matrice polymère conductrice est(sont) présent(s), dans la solution (S), en une quantité maximale déterminée par rapport à leur solubilité dans le solvant employé.

La réaction de dépôt électrochimique de la matrice polymère conductrice sur les nano-objets de forme allongée i.e. l'étape (b) du procédé selon l'invention est avantageusement réalisée en absence d'oxygène i.e. en atmosphère inerte. A titre d'exemple, un gaz inerte tel que l'argon ou l'azote peut être employé pour générer cette atmosphère inerte. L'utilisation d'une atmosphère inerte et d'un bullage d'un gaz inerte dans la solution (S) permet de dissoudre l'oxygène éventuellement présent dans cette solution (S) ; à la matrice polymère conductrice de revêtir de façon uniforme et continue la surface des nano-objets ; et éventuellement d'améliorer les performances électrochimiques du matériau composite obtenu.

Le procédé selon la présente invention et notamment l'étape (b) de ce procédé sont typiquement réalisés dans une cellule électrochimique équipée d'une électrode de référence, d'une électrode de travail et d'une contre électrode. L'électrode de référence est soit de type ECS (pour « électrode au calomel saturé »), soit une électrode de référence Ag/AgCl, [KCl] = 3 M, soit éventuellement un simple fil de platine. L'électrode de travail est constituée par les nano-objets de forme allongée conducteurs ou semi-conducteurs de l'électricité et la contre-électrode une grille de platine ou une plaque de titane platiné.

Typiquement, l'étape (b) du procédé selon la présente invention dure entre 1 et 60 min, notamment entre 2 et 45 min et, en particulier, entre 3 et 30 min. Cette étape (b) est avantageusement mise en oeuvre à une température comprise entre 10 et 50°C, notamment entre 15 et 40°C et, en particulier, à température ambiante (i.e. à 22°C ± 5°C).

La présente invention concerne également un matériau composite susceptible d'être préparé par le procédé selon l'invention tel que précédemment défini. Le matériau composite selon l'invention peut être appelé « nanocomposite » de par la présence de nano-objets en son sein.

Avantageusement, la densité des nano-objets de forme allongée conducteurs ou semi-conducteurs de l'électricité, dans le matériau selon la présente invention peut être variable. Cette dernière est avantageusement comprise entre 10⁴ et 10¹³ nano-objets/cm² de matériau. Il est ainsi possible d'avoir un matériau présentant un tapis dense de nano-objets alignés, avec de l'ordre de 10⁹ à 10¹³ nano-objets/cm² et notamment de l'ordre de 10⁹ à 10¹¹ nano-objets/cm².

Le pourcentage en masse de la matrice polymère conductrice de l'électricité exprimée par rapport à la masse totale du matériau composite selon l'invention est supérieure à 20%, notamment compris entre 25 et 80% et, en particulier, entre 50 et 75%. La masse de la matrice polymère conductrice de l'électricité et celle du matériau composite peuvent être obtenues par ATG pour « Analyse Thermo Gravimétrique » et/ou par pesée.

Ainsi, la présente invention concerne un matériau composite susceptible d'être préparé par le procédé selon l'invention tel que précédemment défini, dans lequel les nano-objets de forme allongée conducteurs ou semi-conducteurs de l'électricité se présentent sous forme d'un tapis de nano-objets alignés.

Parmi les matériaux composites selon l'invention, on peut avantageusement citer les matériaux composites dans lesquels les nano-objets de forme allongée conducteurs ou semi-conducteurs de l'électricité sont des NTC se présentant sous forme de tapis et dont la longueur est supérieure à 200 µm.

Les matériaux composites selon l'invention tels que ceux comprenant des NTC et, en particulier, des NTC sous forme de tapis sont notamment des matériaux auto-supportés et flexibles. Par « matériau auto-supporté », on entend, dans le cadre de la présente invention, un matériau qui présente une tenue mécanique sans nécessiter de traitement préalablement ou suite au procédé de l'invention tel qu'une métallisation des nano-objets, le collage du matériau sur un collecteur rigide ou plastique ou encore conducteur de l'électricité.

La présente invention concerne enfin l'utilisation de tels matériaux composites ou susceptibles d'être préparés par le procédé de l'invention dans les électrodes positives/négatives d'un supercondensateur ou de batteries, dans les électrodes pour photovoltaïque, dans les matériaux pour le stockage du CO₂ ou dans les électrodes pour capteurs électrochimiques. Ainsi, la présente invention concerne une électrode positive/négative d'un supercondensateur ou de batteries, une électrode pour photovoltaïque, un matériau pour le stockage du CO₂ ou une électrode pour capteurs électrochimiques comprenant un matériau composite selon la présente invention ou susceptible d'être préparé par le procédé de l'invention.

D'autres caractéristiques et avantages de la présente invention apparaîtront encore à l'homme du métier à la lecture des exemples ci-dessous donnés à titre illustratif et non limitatif, en référence aux figures annexées.

### BRÈVE DESCRIPTION DES DESSINS

La Figure 1 est une schématisation du dispositif utilisé pour mettre en oeuvre le procédé de l'invention.
La Figure 2 présente le profil de pulses utilisés au cours des dépôts électrochimiques.
La Figure 3 présente les courbes de voltampérométrie cyclique obtenues pour les nanotubes de carbone (« NTC seuls », C = 3-6 F/g), pour le polymère seul (« P3MT », C = 80-100 F/g) et pour le nanocomposite selon l'invention (« nanocomposite », C = 130-140 F/g) ; v = 5 mV/s.
La Figure 4 présente des images en microscopie électronique à transmission de deux nanocomposites réalisés selon deux conditions opératoires : mode galvanostatique pulsé à 50 séquences (Figure 4A) et à 75 séquences (Figure 4B).
La Figure 5 présente les courbes de décharge d'un nanocomposite P3MT/NTC selon l'invention à 10 mA/cm² (Figure 5A) et à 5 mA/cm² (Figure 5B).
La Figure 6 présente des photographies d'un tapis de nanotubes de carbone traité conformément au procédé de l'invention à plat (Figure 6A) ou maintenu par une pince (Figure 6B).
La Figure 7 présente des images en microscopie électronique à transmission de deux nanocomposites selon l'invention dans lesquels le P3MT a été déposé sur des NTC à 2 mA/cm² (Figures 7A et 7C) ou à 4 mA/cm² (Figures 7B et 7D). Les Figures 7C et 7D sont des images détaillées correspondant respectivement à la zone matérialisée par un carré des Figures 7A et 7B.
La Figure 8 présente l'évolution de la capacitance d'un nanocomposite selon l'invention (NTC/P3MT) en fonction du nombre de pulses.
La Figure 9 présente l'évolution de la capacitance en fonction de la teneur en polymère conducteur (P3MT). En pointillé, le taux de P3MT à partir duquel l'échantillon devient auto-supporté et flexible.
La Figure 10 présente des images en microscopie électronique à balayage de nanocomposites NTC/P3MT selon l'invention. La Figure 10A correspond à l'image de la surface d'un nanocomposite à 80% de P3MT et la Figure 10C à l'image des nanotubes recouverts de P3MT de ce nanocomposite. La Figure 10B correspond à l'image de la surface imperméable d'un nanocomposite à plus de 85% de P3MT et la Figure 10D à l'image de la couche imperméable vue sur la tranche de ce nanocomposite.
La Figure 11 est une représentation des pulses au cours d'une électropolymérisation et ce avec un temps de repos suffisant de 300 sec (Figure 11A) ou avec un temps de repos inférieur et insuffisant (Figure 11B) .
La Figure 12 présente l'évolution de la capacitance (•) et celle du rendement de polymérisation ( ■ ) en fonction du temps de pulse.
La Figure 13 présente une caractérisation par voltamétrie cyclique des nanocomposites selon l'invention (NTC/P3MT) pour les temps de pulse faibles (Figure 13A) et pour les temps de pulse longs (Figure 13B).

### EXPOSÉ DÉTAILLÉ DE MODES DE RÉALISATION PARTICULIERS

### 1. Description du dispositif de l'invention.

Le dispositif mis en oeuvre dans le cadre du procédé selon l'invention schématisé à la Figure 1 comprend une cellule électrochimique à trois électrodes.

Cette dernière comprend (1) une électrode de travail (WE) constituée par les nano-objets de forme allongée, notamment, les NTC et, en particulier, le tapis de NTC, (2) une contre-électrode (CE) telle qu'une plaque de titane platiné et (3) une électrode de référence (RE) telle qu'un fil d'argent.

De plus, la cellule électrochimique est maintenue dans un bain thermostaté notamment à 30°C. Ce bain thermostaté peut être un bain à circulation d'eau avec une entrée d'eau (Ee) et une sortie d'eau (Se).

La solution électrolytique (S) mise en contact avec ces électrodes dans la cellule électrochimique comprend les monomères qui, par polymérisation, permettent d'obtenir la matrice polymère, en solution, monomères et matrice polymère étant tels que précédemment définis. Pour les exemples ci-après, la solution (S) utilisée est une solution de liquide ionique (EMITFSI) contenant 0,2 M de 3-méthylthiophène (3MT ou MeT). Le polymère obtenu et déposé sur le tapis de NTC est le poly(3-méthylthiophène) (P3MT ou PMeT).

Lors de la mise en oeuvre du procédé selon l'invention et notamment lors de la polymérisation, un bullage d'argon (Ba) peut être maintenu dans la solution (S) permettant de maintenir la teneur en argon et de mélanger doucement cette solution.

### 2. Modes de réalisation.

Comme précédemment expliqué, la caractéristique essentielle du procédé selon l'invention est l'utilisation d'un mode séquencé galvanostatique pour déposer, sur l'électrode de travail, le polymère obtenu à partir des monomères présents dans la solution (S).

La Figure 2 montre le profil de pulse de courant utilisé. Des essais de variation de ce profil ont été réalisés de telle sorte que la même quantité d'électricité soit passée au cours de la polymérisation et ce, afin d'avoir systématiquement le même ratio m _{polymère conducteur} / m _{ntc}.

En trait plein sur la Figure 2, il s'agit du profil classique, en trait pointillé, un autre profil permettant d'avoir la même charge passée (les aires sous les courbes sont identiques).

Par cette méthode, on obtient un nanocomposite polymère conducteur/nanotubes de carbone (PCE/NTC) dont la masse de NTC est de l'ordre de 20 à 25% par rapport à la masse totale du nanocomposite. Cette valeur a été vérifiée par ATG et par pesée.

### 3. Caractérisation du nanocomposite obtenu.

### 3.1. Preuve de l'effet « nanostructuration » sur les valeurs de capacitance.

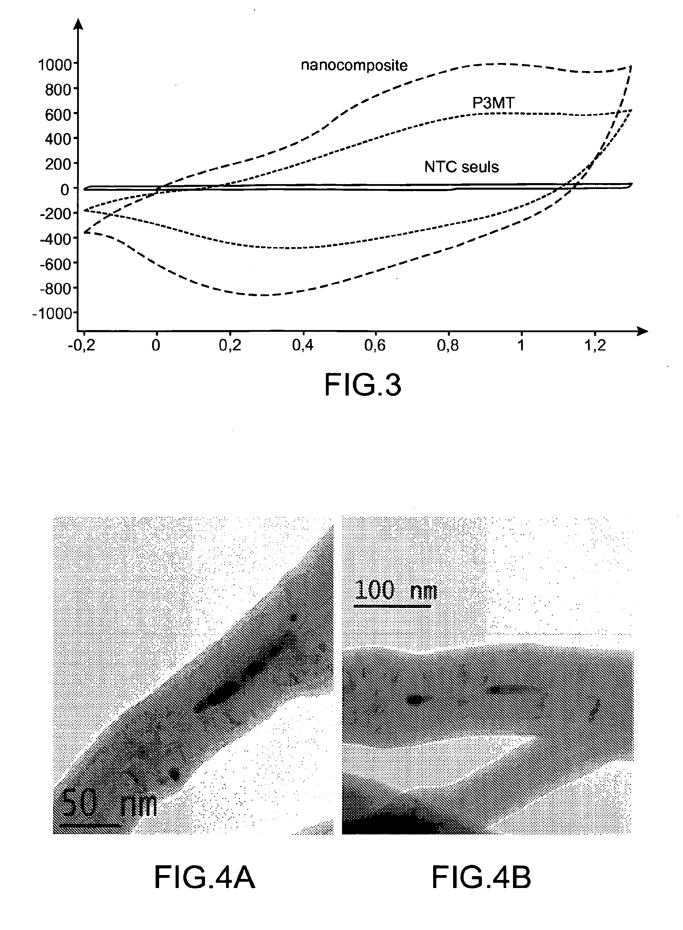

Des études de voltampérométrie cyclique (CV) ont été réalisées (Figure 3). Ainsi, ces études permettent de montrer que l'aire sous la courbe correspondant au nanocomposite est supérieure à la somme des aires des deux autres courbes i.e. courbe du polymère P3MT et des NTC seuls.

Cette nanostructuration est une première indication quant à une bonne répartition du P3MT le long des NTC.

### 3.2. Preuve de la polymérisation du monomère le long des NTC.

Une mesure de la distribution de l'élément soufre par sonde EDX sur l'épaisseur du tapis a permis de contrôler que le polymère P3MT est présent tout au long des tubes alignés. Au contraire, en mode galvanostatique continu, le polymère ne pénètre pas tout le long du tapis, ce qui illustre bien l'apport de l'utilisation d'un mode galvanostatique pulsé.

De même, les images en microscopie électronique à transmission (MET) présentées Figure 4 montrent bien le recouvrement des NTC par le polymère conducteur (P3MT). Elles montrent bien la répartition homogène du polymère conducteur sur les tubes et, de plus, il est possible de déterminer l'épaisseur du film déposé et ce, pour deux modes opératoires distincts.

Ainsi, pour un procédé avec un mode galvanostatique pulsé à 50 séquences, le polymère présente une épaisseur de 8 nm (Figure 4A), alors que, pour un mode galvanostatique pulsé à 75 séquences, cette épaisseur est de 18 nm (Figure 4B).

### 3.3. Mesures des capacitances.

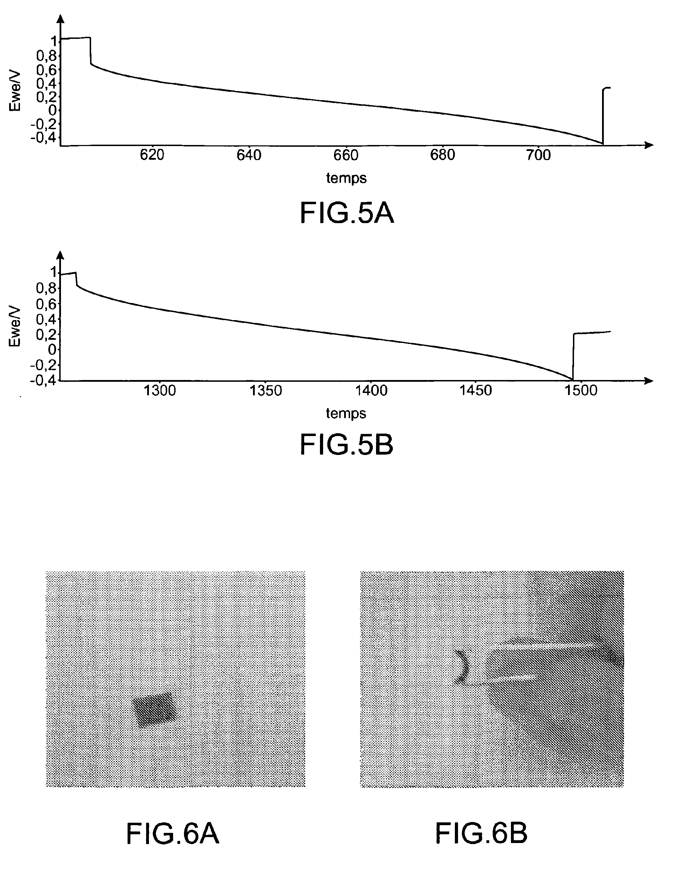

Les capacitances sont mesurées en effectuant des cycles de charge/décharge à densité de courant constante. La Figure 5 illustre deux exemples à J = 10 mA/cm² (Figure 5A) et J = 5 mA/cm² (Figure 5B), valeurs étant couramment utilisées pour l'application en stockage électrochimique.

Les capacités, mesurées grâce à la pente de la « droite » obtenue sur les courbes de décharge. Ces capacités massiques sont entre **135 F/g et 145 F/g** pour une électrode P3MT/NTC alignés. Ramenée à la masse de P3MT seule, la capacitance est alors de **180 à 200 F/g.**

**Tableau 1 : Données électrochimiques de deux nanocomposites conformes à la présente invention, étudiés à 30°C (ligne 1) et à 60°C (ligne 2) et comparés à un nanocomposite de l'état de la technique.**

| **Type** | **Capacitance** | **Electrolyte** | **Mise en forme** | **Domaine de potentiel** |
|---|---|---|---|---|
| P3MT/CNT alignés à 30°C | 140 F/g à 4mA/cm² | EMITFSI | Electro-polymérisation | -0,2V à 1,2V/Ag |
| P3MT/CNT alignés à 60°C | 170 F/g à 4 et 10mA/cm² | EMITFSI | Electro-polymérisation | -0,2V à 1,06V/Ag |
| P3MT à 30°C | 85-100 F/g à 10mA/cm² | EMITFSI | P3MT broyé, NA, PTFE | -0,5v à 1V/Ag |

Le nanocomposite de l'état de la technique est préparé en mélangeant la poudre de P3MT (préalablement broyée (au mortier ou avec un appareillage spécifique) avec du noir d'acéthylène (NA) et d'un polymère qui sert de liant (le polytétrafluoroéthylene ou PTFE).

Les valeurs obtenues avec les nanocomposites selon l'invention sont très intéressantes pour les liquides ioniques.

On a toutefois une chute ohmique à densité de courant de 10mA/cm², chute inhérente à la viscosité du liquide ionique.

### 3.4. Echantillons auto-supportés

Dans le cas du P3MT, la quantité déposée a une grande influence sur la possibilité de décoller ou non l'échantillon (une des propriétés particulières de la présente invention).

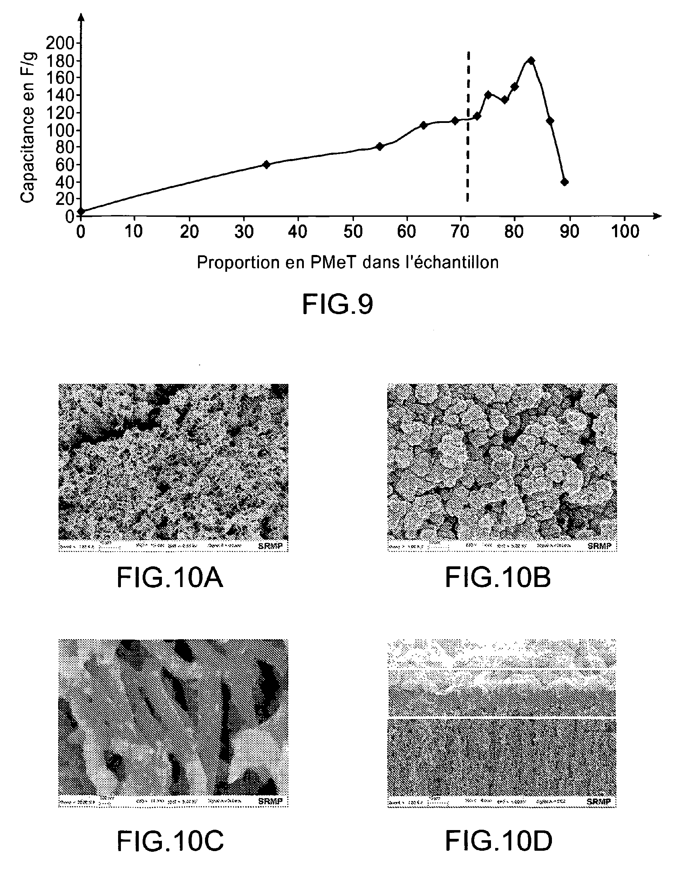

Ce phénomène a lieu vers 70-75% en taux de P3MT (taux exprimé en masse de P3MT sur la masse totale du nanocomposite) pour des NTC de longueur supérieure à 150 µm. Un tel taux est matérialisé sur la Figure 9 ci-après par la ligne verticale en pointillés. Fait intéressant, la capacité maximale se trouve autour de 80%, c'est-à-dire que le matériau auto-supporté (décollé) pourra avoir cette capacitance maximale (cf. Figure 9).

Les échantillons sont auto-supportés (sans collecteur de courant) c'est-à-dire qu'il n'est nullement nécessaire de métalliser les NTC ou de coller des collecteurs d'aluminium pour récolter le courant le long du tapis. De plus, le tapis imprégné de polymère conducteur devient flexible. La figure 6 montre une photo d'un tapis de 1 cm² environ avec le polymère conducteur déposé (Figure 6A). La photo de la Figure 6B permet d'apprécier la bonne flexibilité que possède le nanocomposite après dépôt du polymère conducteur.

### 4. Etude des différents paramètres influençant le dépôt et ses propriétés.

Les paramètres étudiés sont :
- la densité de courant : elle influe sur la vitesse de dépôt du polymère conducteur et donc sur sa qualité.
- le nombre de pulses : il va contrôler l'épaisseur d'un dépôt pour une densité donnée.
- la forme du pulse : le temps de repos peut en effet être un facteur influençant sur la qualité du dépôt.

### 4.1. Densité de courant appliquée durant la polymérisation.

La densité de courant appliqué pour un pulse est un facteur important sur les propriétés du matériau. Une étude a été effectuée avec 3 densités de courant différentes : 2 ; 3 ; 4 mA.cm⁻² et ce, pour un même nombre de pulses et une même quantité de charge appliquée.

**Tableau 2**

| **Densité de courant *J*** | **2mA/cm²** | **3mA/cm²** | **4mA/cm²** |
|---|---|---|---|
| **Taux d'électropolymérisation** | 82% | 87% | 92% |
| **Capacitance** | 85F/g | 105F/g | 110F/g |

L'augmentation de la densité de courant entraîne une amélioration du taux de polymérisation ainsi que de la capacitance du matériau.

### Analyse des dépôts par TEM :

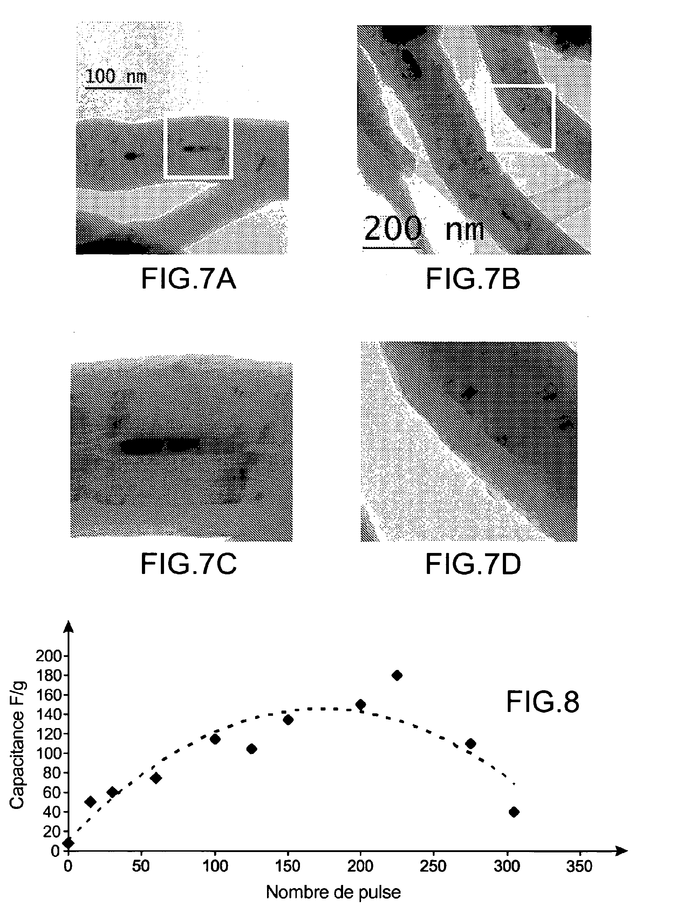

Comme présentée à la Figure 7, la couche déposée à 2 mA/cm² (Figure 7A) est dense et homogène, contrairement à la couche déposée à 4 mA/cm² (Figure 7B). Une vue à un plus fort grossissement des Figures 7A et 7B respectivement Figures 7C et 7D met en évidence des vagues en surface de l'échantillon de la Figure 7D. La cinétique de polymérisation étant plus rapide à 4 mA/cm², une structure plus poreuse est obtenue.

Plus la densité de courant sera importante, plus la structure du polymère déposé sera poreuse et inversement. Une telle porosité peut expliquer l'amélioration de la capacitance. En effet, l'interface solvant/polymère devant être maximum, une plus grande porosité améliore la capacitance.

### 4.2. Nombre de pulses / Longueur des nanotubes.

Ces deux paramètres sont difficilement dissociables. En effet, des échantillons provenant non seulement de synthèse différente, mais aussi d'une même synthèse présentent chacun une longueur de NTC différente car placés à un endroit différent dans le réacteur en quartz tubulaire utilisé pour la synthèse des NTC.

Après un certain nombre de tests, la longueur du tapis de nanotubes de carbone ne semble pas avoir d'effet sur la capacitance pour une faible quantité de polymère déposée, un peu comme s'il n'y avait pas d'effet de nanostructuration dans ce cas. En effet, quelle que soit la longueur de l'échantillon, la courbe d'évolution de la capacitance en fonction du nombre de pulses suivra l'évolution représentée sur la Figure 8 à savoir un profil en cloche.

La chute de capacitance peut s'expliquer par le fait qu'à un moment, le P3MT ne va se déposer qu'à la surface du tapis : l'électrode perd alors de sa structure « 3D » et la capacitance va en être très affectée car tout l'intérieur du tapis ne participe plus au stockage des charges.

La proportion de P3MT dans le nanocomposite selon l'invention est reliée au nombre de pulses appliqués. La capacitance maximum est obtenue pour un échantillon contenant entre 80 et 85% de P3MT (Figure 9). Cette valeur correspond à un taux de remplissage optimal du tapis de nanotubes alignés où il ne reste que peu d'espace entre les tubes.

On suppose aussi qu'à un certain moment, la diffusion du monomère dans le tapis est de plus en plus lente. Lors de la reprise d'un nouveau pulse, c'est plutôt sur la partie supérieure du tapis qu'a lieu la polymérisation, jusqu'à obstruer le tapis. Ce phénomène permet d'expliquer la chute brutale de la capacitance qui est observée sur la Figure 9.

Ainsi, au-delà de 85% en polymère conducteur (P3MT) se forme une couche en surface faisant écran à la solution et entraînant une forte chute de la capacitance. En effet, la matière active en profondeur du tapis n'est plus disponible et elle devient inutile pour le stockage de l'énergie.

Les images en microscopie électronique à balayage (MEB) de la Figure 10 réalisées sur des nanocomposites NTC/P3MT avec un nombre de pulses différents confirment ce fait. Pour les Figures 10A et 10C, 225 pulses ont été utilisés permettant d'obtenir un nanocomposite à 80% de P3MT, alors qu'un nanocomposite à plus de 85% de P3MT a été obtenu avec 275 pulses (Figures 10B et 10D). Les observations de la surface et de la tranche au MEB des nanocomposites ainsi obtenus révèlent un remplissage très important des NTC recouverts de P3MT (Figures 10A et 10C) et une surface imperméable du tapis pour le nanocomposite à plus de 85% de P3MT (Figures 10B et 10D).

### 4.3. Effet du temps de repos et de pulse.

### Temps de repos :

Lors d'une électropolymérisation avec un temps de repos suffisant, le potentiel atteint, diminue au début puis reste quasi-constant tout au long de la synthèse. Ce potentiel atteint est caractéristique du potentiel d'oxydation du polymère généré à l'électrode, (Figure 11A).

Si, au contraire, le temps de repos n'est pas suffisant, la diffusion n'aura pas été suffisante pour renouveler la quantité de monomères. Le système augmente en potentiel afin d'oxyder d'autres espèces en solution à la place du monomère. Cette augmentation caractéristique est représentée sur la Figure 11B. Elle peut conduire à des effets néfastes tels que suroxydation du polymère, réactions indésirables, changement de morphologie ...

### Temps de pulse :

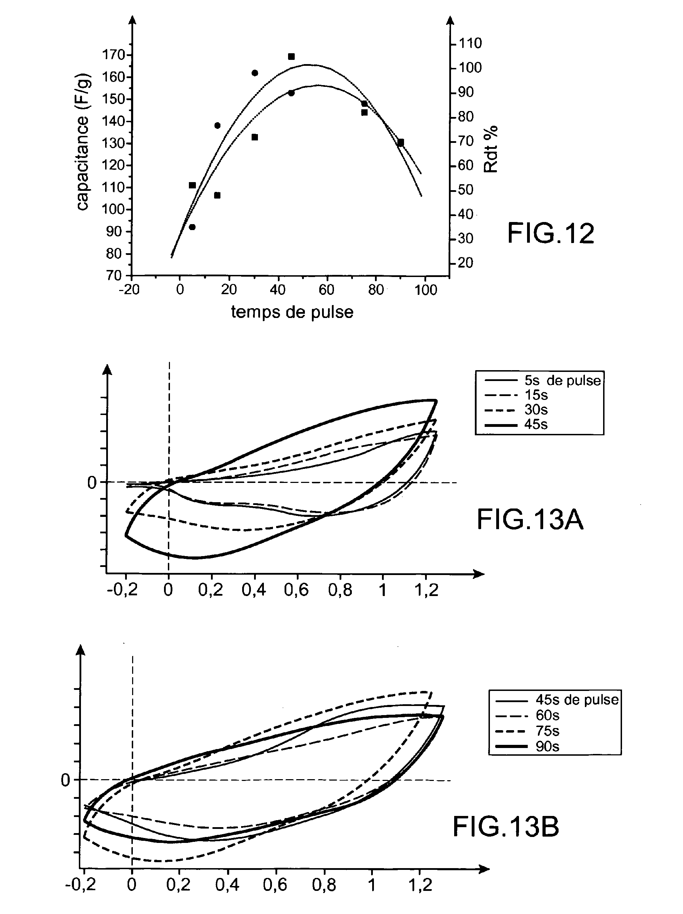

Concernant l'effet du temps de pulse, celui-ci est représenté Figures 12 et 13.

Si on détermine la capacitance en fonction de la durée du pulse, on obtient des courbes en cloche à la fois pour la capacitance et pour le rendement de polymérisation comme le montre la Figure 12.

Aux temps de pulses faibles (5-15 sec), on favorise la formation d'oligomères de MeT. Ceux-ci étant en partie solubles dans le solvant, ils diffusent en solution (car ils en ont le temps) et ne comptent donc pas dans le rendement de polymérisation.

L'optimum moyen de la capacitance s'obtient vers 50 sec de pulse, correspondant en gros à l'optimum du rendement de polymérisation (60 sec de pulse). Au-delà de cet optimum, la capacitance chute. Le temps de polymérisation est trop long et le phénomène de formation de la couche à la surface du tapis de NTC doit s'accentuer.

Les Figures 13A et 13B indiquent également la variation de la charge passant dans le nanocomposite lors de cycles de charge/décharge par voltampérométrie cyclique à balayage et ce pour un temps de pulse court (i.e. inférieur ou égal à 45 sec) ou pour un temps de pulse plus long (i.e. supérieur ou égal à 45 sec).

### 4.4. Dépôt d'autres monomères.

D'autres monomères ont été utilisés pour préparer un nanocomposite selon l'invention à partir de longs tapis de NTC en y déposant les polymères correspondants.

Ces polymères sont :
- la polyanyline (PANI) de formule : 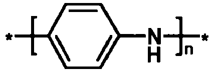
- le polypyrrole (PPy) de formule : 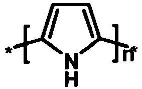
- le poly(3,4-éthylène dioxythiophène) (PEDOT) de formule : 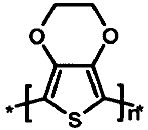
- le poly(3-acide acétique thiophène) (PAAT) possédant une fonction acide apte à être post-fonctionnalisée de formule : 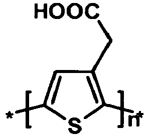
- le poly(carbazole) (PCz) de formule :

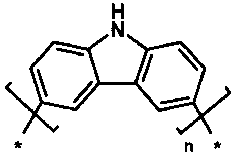

## Revendications

1. Procédé de préparation d'un matériau composite comprenant des nano-objets de forme allongée conducteurs ou semi-conducteurs de l'électricité et une matrice polymère conductrice de l'électricité,
ledit procédé comprenant une étape consistant à déposer électrochimiquement ladite matrice sur lesdits nano-objets par une technique galvanostatique pulsée.

2. Procédé selon la revendication 1, **caractérisé en ce que** lesdits nano-objets de forme allongée conducteurs ou semi-conducteurs de l'électricité sont choisis parmi les nanofibres, les nanotubes et les nanofils.

3. Procédé selon la revendication 1 ou 2, **caractérisé en ce que** lesdits nano-objets de forme allongée conducteurs ou semi-conducteurs de l'électricité sont un matériau choisi dans le groupe constitué par le carbone, le silicium, l'or, l'argent, le tantale, le nickel, le platine, le cuivre, le molybdène, le palladium, l'acier, l'acier inoxydable, le zinc, le nitrure de bore, l'oxyde de zinc, l'oxyde de manganèse, le nitrure de gallium, le nitrure de silicium, le bisulfure de tungstène, le bisulfure de molybdène, le phosphure d'indium, le séléniure de tungstène, le séléniure de molybdène, le dioxyde de titane, le dioxyde de silicium, le trioxyde de molybdène et leurs mélanges.

4. Procédé selon les revendications 1 à 3, **caractérisé en ce que** lesdits nano-objets de forme allongée conducteurs ou semi-conducteurs de l'électricité se présentent sous forme d'un tapis dans lequel les nano-objets sont alignés.

5. Procédé selon l'une quelconque des revendications 1 à 4, **caractérisé en ce que** ladite matrice polymère conductrice de l'électricité est constituée d'un (ou plusieurs) (co)polymère(s) choisi(s) parmi les polyfluorènes, les polypyrènes, les polyazulènes, les polynaphtalènes, les polypyrroles, les polycarbazoles, les polyindoles, les polyazépines, les polyanilines, les polythiophènes, les poly(p-phénylène sulfide), les polyacétylènes et les poly(p-phénylène vinylène).

6. Procédé selon l'une quelconque des revendications précédentes, **caractérisé en ce que**, dans la technique galvanostatique pulsée, une densité de courant constante est appliquée pendant des périodes (tₒₙ) de durée comprise entre 10 et 100 s, notamment entre 20 et 80 s et, en particulier, entre 30 et 60 s.

7. Procédé selon l'une quelconque des revendications précédentes, **caractérisé en ce que**, dans la technique galvanostatique pulsée, la durée de chaque période de repos (t_{off}) est supérieure à la durée de chaque période d'application d'une densité de courant constante (tₒₙ) d'un facteur 2, notamment d'un facteur 3, en particulier, d'un facteur 4 et, plus particulièrement, d'un facteur 5.

8. Procédé selon l'une quelconque des revendications précédentes, **caractérisé en ce que** ledit procédé comprend les étapes consistant à :
a) mettre en contact les nano-objets de forme allongés conducteurs ou semi-conducteurs de l'électricité avec une solution (ci-après désignée solution (S)) contenant le (ou les) monomère(s), précurseur(s) de ladite matrice polymère conductrice ;
b) polariser lesdits nano-objets en mode galvanostatique pulsé moyennant quoi ladite matrice polymère conductrice est électrochimiquement déposée sur lesdits nano-objets.

9. Procédé selon la revendication 8, **caractérisé en ce que** préalablement à ladite étape (a), les nano-objets de forme allongée conducteurs ou semi-conducteurs de l'électricité sont soumis à un traitement (ou pré-traitement) oxydant.

10. Procédé selon la revendication 8 ou 9, **caractérisé en ce que** ladite solution (S) se présente sous forme d'un solvant, protique ou aprotique, pur ; sous forme d'une solution électrolytique contenant, comme solvant, un solvant protique ou un solvant aprotique ; ou sous forme d'un liquide ionique.

11. Matériau composite susceptible d'être préparé par un procédé selon l'une quelconque des revendications 1 à 10, **caractérisé en ce que** lesdits nano-objets de forme allongée conducteurs ou semi-conducteur de l'électricité se présentent sous forme d'un tapis de nano-objets alignés et **en ce que**, lorsque lesdits nano-objets sont des nanotubes de carbone se présentant sous forme de tapis, leur longueur est supérieure à 200 µm.

12. Matériau composite selon la revendication 11, **caractérisé en ce que** ledit matériau est auto-supporté et flexible.

13. Utilisation d'un matériau composite selon la revendication 11 ou 12 ou susceptible d'être préparé par un procédé selon l'une quelconque des revendication 1 à 10 dans les électrodes positives/négatives de supercondensateur ou de batteries, dans les électrodes pour photovoltaïque, dans les matériaux pour le stockage du CO₂ ou dans les électrodes pour capteurs électrochimiques.

## Patentansprüche

1. Verfahren zur Herstellung eines Verbundwerkstoffes, umfassend elektrisch leitende oder halbleitende Nanoobjekte von länglicher Form und eine elektrisch leitfähige polymerische Matrix,
wobei das genannte Verfahren einen darin bestehenden Schritt umfasst, die genannte Matrix durch eine gepulste galvanostatische Technik abzuscheiden.

2. Verfahren nach Anspruch 1, **dadurch gekennzeichnet, dass** die genannten elektrisch leitenden oder halbleitenden Nanoobjekte von länglicher For ausgewählt werden unter den Nanofasern, den Nanoröhren und den Nanofäden.

3. Verfahren nach Anspruch 1 oder 2, **dadurch gekennzeichnet, dass** die genannten elektrisch leitenden oder halbleitenden Nanoobjekte von länglicher Form aus einem Werkstoff aus der Gruppe sind, die gebildet wird durch den Kohlenstoff, das Silicium, das Gold, das Silber, das Tantal, das Nickel, das Platin, das Kupfer, das Molybdän, das Palladium, den Stahl, den rostfreien Stahl, das Zink, das Bornitrid, das Zinkoxid, das Manganoxid, das Galliumnitrid, das Siliciumnitrid, das Wolframdisulfid, das Molybdändisulfid, das Indiumphosphid, das Wolframselenid, das Molybdänselenid, das Titandioxid, das Siliciumdioxid, das Molybdäntrioxid und ihre Mischungen.

4. Verfahren nach den Ansprüchen 1 bis 3, **dadurch gekennzeichnet, dass** die genannten elektrisch leitenden oder halbleitenden Nanoobjekte von länglicher Form sich in Form einer Matte präsentieren, in der die Nanoobjekte ausgerichtet sind.

5. Verfahren nach den Ansprüchen 1 bis 4, **dadurch gekennzeichnet, dass** die genannte elektrisch leitfähige Matrix gebildet wird durch ein (oder mehrere) (Co)Polymer(e), ausgewählt unter den Polyfluorenen, den Polypyrenen, den Polyazulenen, den Polynaphtalinen, den Polypyrrolen, den Polycarbazonen, den Polyindolen, den Polyazepinen, den Polyanilinen, den Polythiophenen, den Poly-p-phenylensulfiden, den Polyacetylenen, den Poly(p-phenylen)vinylenen.

6. Verfahren nach eine der vorhergehenden Ansprüche, **dadurch gekennzeichnet, dass** in der gepulsten galvanostatischen Technik während Perioden (tₒₙ) mit einer zwischen 10 und 100 s, besonders zwischen 20 und 80 s, insbesondere zwischen 30 und 60 s enthaltenen Dauer eine konstante Stromdichte angewendet wird.

7. Verfahren nach einem der vorhergehenden Ansprüche, **dadurch gekennzeichnet, dass** in der gepulsten galvanostatischen Technik die Dauer jeder Ruheperiode (t_{off}) um einen Faktor 2, besonders um einen Faktor 3, insbesondere um einen Faktor 4 und, vor allem, um einen Faktor 5 größer ist als die Dauer jeder Anwendungsperiode einer konstanten Stromdichte.

8. Verfahren nach eine der vorhergehenden Ansprüche, **dadurch gekennzeichnet, dass** das genannte Verfahren die darin bestehenden Schritte umfasst:
a) Herstellen des Kontakts zwischen den genannten elektrisch leitenden oder halbleitenden Nanoobjekten von länglicher Form mit einer Lösung (in der Folge als Lösung (S) bezeichnet), welche das (oder die) Monomer(e), Vorläufer der genannten leitfähigen polymerischen Matrix, enthält ;
b) Polarisieren der genannten Nanoobjekte im gepulsten galvanostatischen Betrieb, mittels dem die genannte polymerische Matrix elektrochemisch auf den genannten Nanoobjekten abgeschieden wird.

9. Verfahren nach Anspruch 8, **dadurch gekennzeichnet, dass** die genannten elektrisch leitenden oder halbleitenden Nanoobjekte von länglicher Form einer oxidierenden Behandlung (oder Vorbehandlung) unterzogen werden.

10. Verfahren nach Anspruch 8 oder 9, **dadurch gekennzeichnet, dass** die genannte Lösung (S) sich präsentiert in Form einer reinen Lösung, protisch oder aprotisch ; in Form einer elektrolytischen Lösung mit, als Lösungsmittel, einem protischen Lösungsmittel oder einem aprotischen Lösungsmittel ; oder in Form einer ionischen Flüssigkeit.

11. Verbundwerkstoff, hergestellt nach eine der Ansprüche 1 bis 10, **dadurch gekennzeichnet, dass** die genannten elektrisch leitenden oder halbleitenden Nanoobjekte von länglicher Form sich in Form einer Matte aus ausgerichteten Nanoobjekten präsentiert und dass, wenn die genannten Nanoobjekte sich in Form einer Kohlenstoffnanoröhrenmatte präsentierende Nanoröhren sind, ihre Länge größer als 200 µm ist.

12. Verbundwerkstoff nach Anspruch 11, **dadurch gekennzeichnet, dass** der genannte Werkstoff selbsttragend und flexibel ist.

13. Verwendung eines Verbundwerkstoffes nach Anspruch 11 oder 12 oder möglicherweise hergestellt durch ein Verfahren nach einem der Ansprüche 1 bis 10 bei den positiven/negativen Elektroden von Superkondensatoren oder von Batterien, bei den Elektroden für Fotovoltaik, bei den Materialien zur Speicherung von CO₂ oder bei den Elektroden für elektrochemische Sensoren.

## Claims

1. Method for preparing a composite material comprising electrically conductive or semiconductive nano-objects of elongate shape and an electrically conductive polymer matrix,
said method comprising a step consisting in electrochemically depositing said matrix on said nano-objects using a pulsed galvanostatic technique.

2. Method according to claim 1, **characterized in that** said electrically conductive or semiconductive nano-objects of elongate shape are chosen from among nanofibers, nanotubes and nanowires.

3. Method according to claim 1 or 2, **characterized in that** said electrically conductive or semiconductive nano-objects of elongate shape are in a material chosen from the group consisting of carbon, silicon, gold, silver, tantalum, nickel, platinum, copper, molybdenum, palladium, steel, stainless steel, zinc, boron nitride, zinc oxide, manganese oxide, gallium nitride, silicon nitride, tungsten disulfide, molybdenum disulfide, indium phosphide, tungsten selenide, molybdenum selenide, titanium dioxide, silicon dioxide, molybdenum trioxide, and mixtures thereof.

4. Method according to claims 1 to 3, **characterized in that** said electrically conductive or semiconductive nano-objects of elongate shape are in the form of a carpet in which the nano-objects are aligned.

5. Method according to any of claims 1 to 4, **characterized in that** said elecrically conductive polymer matrix is formed of one (or more) (co)polymers chosen from among the polyfluorenes, polypyrenes, polyazulenes, polynaphtalenes, polypyrroles, polycarbazoles, polyindoles, polyazepines, polyanilines, polythiophenes, poly(p-phenylene sulfides), polyacetylenes and poly(p-phenylene vinylenes).

6. Method according to any of the preceding claims, **characterized in that**, in the pulsed galvanostatic technique, a constant current density is applied for periods (tₒₙ) of duration between 10 and 100 s, in particular between 20 and 80 s, and more particularly between 30 and 60 s.

7. Method according to any of the preceding claims, **characterized in that** in the pulsed galvanostatic technique the duration of each rest period (t_{off}) is greater than the duration of each period of application of a constant current density (tₒₙ) by a factor of 2, in particular by a factor of 3, more particularly by a factor of 4, and further particularly by a factor of 5.

8. Method according to any of the preceding claims, **characterized in that** said method comprises the steps of:
a) contacting the electrically conductive or semiconductive nano-objects of elongate shape wit a solution (hereinafter designated solution (S)) containing the monomer(s) precursor(s) of said conductive polymer matrix;
b) polarising said nano-objects in pulsed galvanostatic mode, whereby said conductive polymer matrix is electrochemically deposited on said nano-objects.

9. Method according to claim 8, **characterized in that** prior to said step (a), the electrically conductive or semiconductive nano-objects of elongate shape are subjected to an oxidizing treatment (or pre-treatment).

10. Method according to claim 8 or 9, **characterized in that** said solution (S) is in the form of a pure, protic or aprotic solvent; in the form of an electrolytic solution containing, as solvent, a protic solvent or an aprotic solvent; or in the form of an ionic liquid.

11. Composite material able to be prepared using the method according to any of claims 1 to 10, **characterized in that** said electrically conductive or semiconductive nano-objects of elongate shape are in the form of a carpet of aligned nano-objects and **in that**, when said nano-objects are carbon nanotubes in carpet form, their length is longer than 200 µm.

12. Composite material according to claim 11, **characterized in that** said material is self-supported and flexible.

13. Use of a composite material according to claim 11 or 12, or able to be prepared using a method according to any of claims 1 to 10, in positive/negative electrodes of supercapacitors or of batteries, in electrodes for photovoltaics, in materials for CO₂ storage or in electrodes for electrochemical sensors.
